# EUROPÄISCHE PATENTSCHRIFT

(11) **EP 1 798 450 B1**
(45) Veröffentlichungstag und Bekanntmachung des Hinweises auf die Patenterteilung: **12.01.2011**
(21) Anmeldenummer: 06024698.0
(22) Anmeldetag: 29.11.2006
(51) Int. Cl.: F16H 61/32, F16D 48/06

(54) **Aktor zum Betätigen einer Kupplung und/oder eines Getriebes**
Clutch and/or gearbox actuator
Actionneur d'embrayage et/ou de boîte de vitesse

(30) Priorität: 17.12.2005 DE 102005060599
(43) Veröffentlichungstag der Anmeldung: 20.06.2007
(73) Patentinhaber: Schaeffler Technologies GmbH & Co. KG, 91074 Herzogenaurach (DE)
(72) Erfinder: Pfund, Thomas, 76547 Leiberstung (DE); Buchet, Wai-Wai, 67000 Strasbourg (FR); Kro, Sven-Jostein, 77833 Ottersweier (DE); Zimmermann, Martin, 77880 Sasbach (DE); Gerhart, Jürgen, 77767 Appenweier (DE); Fuß, Martin, Wooster, Ohio 44691 (US)

(56) Entgegenhaltungen:
- DE-A1- 10 316 436
- DE-A1- 19 823 772
- GB-B- 2 375 155

## Beschreibung

Die Erfindung betrifft einen Aktor zum Betätigen einer Kupplung und/oder eines Getriebes in einem Kraftfahrzeug, mit einem Elektromotor und einem Inkrementalgeber dafür, wobei der Inkrementalgeber einen Lagemesssignalausgang aufweist, an dem ein Lagemesssignal ausgebbar ist, das eine Anzahl von unterschiedlichen Signalzuständen aufweist, die jeweils einer Relativposition zwischen einem Primärteil und einem Sekundärteil des Elektromotors zugeordnet sind, wobei der Lagemesssignalausgang zur Kommutierung des Elektromotors mit einem Lagemesssignaleingang einer Ansteuereinrichtung für eine Motorwicklung des Elektromotors verbunden ist, wobei die Ansteuereinrichtung eine Einrichtung zur Überprüfung der Plausibilität des Lagemesssignals aufweist und derart ausgestaltet ist, dass beim Auftreten eines nicht plausiblen Signalzustands die Stromzufuhr zum Elektromotor gesperrt und/oder die Leistung des Elektromotors begrenzt wird. Ferner betrifft die Erfindung einen Aktor zum Betätigen einer Kupplung und/oder eines Getriebes in einem Kraftfahrzeug, mit einem eine Motorwicklung aufweisenden Elektromotor und einem Inkrementalgeber dafür, wobei der Inkrementalgeber einen Lagemesssignalausgang aufweist, der zur Kommutierung des Elektromotors mit einem Lagemesssignaleingang einer Ansteuereinrichtung für den Elektromotor verbunden ist, wobei die Ansteuereinrichtung eine Stromversorgungseinrichtung für den Inkrementalgeber hat und über eine Endstufe mit der Motorwicklung verbunden ist. Außerdem bezieht sich die Erfindung auf ein Verfahren zum Betreiben eines einen Elektromotor aufweisenden Aktors in einem Kraftfahrzeug, wobei ein Lagemesssignal für den Elektromotor erfasst und der Elektromotor in Abhängigkeit von dem Lagemesssignal kommutiert wird, wobei das Lagemesssignal eine Anzahl von unterschiedlichen Signalzuständen aufweist, die jeweils einer Relativposition zwischen einem Primärteil und einem Sekundärteil des Elektromotors zugeordnet sind, wobei die Plausibilität des Lagemesssignals überprüft und beim Auftreten eines nicht plausiblen Signalzustands die Stromzufuhr zum Elektromotor gesperrt und/oder die Leistung des Elektromotors begrenzt wird.

Ein Aktor der eingangs genannten Art, der zum Betätigen einer Schaltwelle eines automatisierten Schaltgetriebes in einem Kraftfahrzeug vorgesehen ist, ist aus der Praxis bekannt. Er hat als Antrieb einen Elektromotor mit einem eine Wicklung aufweisenden Stator und einem damit zusammenwirkenden permanentmagnetischen Rotor. Am Umfang des Rotors ist eine Reihe von Permanent-Magnetsegmenten angeordnet, die sich in Umfangsrichtung erstreckt und abwechselnd Nord- und Südpole aufweist. Zum Erfassen der Relativposition zwischen Rotor und Stator ist an dem Elektromotor ein Inkrementalgeber angeordnet, der am Stator mehrere in Umfangsrichtung voneinander beabstandete Hallsensoren aufweist, die das Magnetfeld der vorbeilaufenden Permanent-Magnetsegmente detektieren. Der Inkrementalgeber ist mit einer Ansteuereinrichtung verbunden, welche die Messsignale der Hallsensoren auswertet und die Wicklung in Abhängigkeit von der Lage des Rotors relativ zum Stator kommutiert. Die Ansteuereinrichtung ist in einem räumlich von dem Inkrementalgeber getrennten Gehäuse angeordnet und über elektrische Kabel mit dem Inkrementalgeber verbunden. Damit bei einem Ausfall oder einer Störung des Inkrementalgebers die Schaltwelle nicht unkontrolliert verstellt wird, hat die Ansteuereinrichtung eine Einrichtung zur Überprüfung der Plausibilität des Lagemesssignals. Beim Auftreten eines nicht plausiblen Signalzustands wird mit Hilfe der Ansteuereinrichtung die Stromzufuhr zum Elektromotor gesperrt. Damit der Elektromotor kostengünstig herstellbar ist sowie ein geringes Gewicht und kompakte Abmessungen aufweist, ist er so dimensioniert, dass er zwar für eine Kurzbelastung, nicht jedoch für einen Dauerbetrieb geeignet ist. Damit sich der Elektromotor bei den in der Praxis auftretenden Betriebszuständen dennoch nicht überhitzt, wird der Dimensionierung ein ungünstiger Betriebszustand zu Grunde gelegt, wie z.B. eine Bergfahrt bei voll beladenem Kraftfahrzeug und hohen Außentemperaturen. Dieser Betriebszustand tritt im normalen Betrieb des Kraftfahrzeugs nur sehr selten auf, so dass der Elektromotor für die während des Betriebs des Kraftfahrzeugs üblicherweise auftretenden Belastungen überdimensioniert ist.

Es besteht deshalb die Aufgabe, einen Aktor der eingangs genannten Art zu schaffen, der kostengünstig herstellbar ist und kompakte Abmessungen ermöglicht. Ferner besteht die Aufgabe, ein Verfahren der eingangs genannten Art anzugeben, das kostengünstig durchführbar ist.

Diese Aufgabe wir bezüglich des Aktors dadurch gelöst, dass der Inkrementalgeber eine zur Erfassung der Betriebstemperatur des Elektromotors ausgebildete Temperaturüberwachungseinrichtung aufweist, und dass der Inkrementalgeber derart ausgebildet ist, dass beim Auftreten einer außerhalb des Sollwertbereichs liegenden Betriebstemperatur an den Lagemesssignalausgang ein nicht plausibler Signalzustand anlegt wird.

In vorteilhafter Weise können dadurch die für die Übertragung des Lagemesssignals zwischen dem Inkrementalgeber und der Ansteuereinrichtung vorgesehenen Leitungen auch zum Abschalten und/oder zum Begrenzen der Stromzufuhr des Elektromotors genutzt werden, wenn einmal ein Betriebszustand auftreten sollte, bei dem die Betriebstemperatur des Elektromotors einen vorgegebenen Grenzwert überschreitet. Somit kann eine zusätzliche Steuerleitung zwischen dem Inkrementalgeber und der Ansteuereinrichtung eingespart werden. Die für einen herkömmlichen Aktor ohne Temperaturüberwachungseinrichtung vorhandenen Bauteile, wie z.B. die Ansteuereinrichtung, elektrische Anschlusskabel oder Kabelstecker können für den erfindungsgemäßen Aktor ohne Änderungen übernommen werden. Da die Betriebstemperatur des Elektromotors bei ungünstigen Betriebszuständen begrenzt wird, kann der Elektromotor kleiner dimensioniert werden als dies ohne eine solche Begrenzung möglich wäre. Dabei wird eine Leistungsbegrenzung und/oder Abschaltung des Elektromotors und eine damit eventuell einhergehende Komforteinbuße bei den in der Praxis nur selten auftretenden, zu einer thermischen Spitzenbelastung des Elektromotors führenden Betriebszuständen in Kauf genommen.

Bei einer vorteilhaften Ausführungsform der Erfindung weist der Lagemesssignalausgang mehrere, unterschiedlichen Stellen oder Bits des Lagemesssignals zugeordnete Ausgangsanschlüsse auf, wobei der Inkrementalgeber derart ausgebildet ist, dass beim Auftreten der außerhalb des Sollwertbereichs liegenden Betriebstemperatur mindestens ein Ausgangsanschluss auf ein vorgegebenes, festes elektrisches Potential gelegt wird. Die Temperaturbegrenzung des Elektromotors kann dadurch noch kostengünstiger realisiert werden.

Bei einer bevorzugten Ausgestaltung der Erfindung weist der Inkrementalgeber Hallsensoren zur Erfassung eines von der Relativposition zwischen dem Primärteil und dem Sekundärteil abhängigen Magnetfelds auf, wobei Betriebsspannungsanschlüsse der Hallsensoren mit einer Stromversorgungseinrichtung verbunden sind, und wobei die Temperaturüberwachungseinrichtung derart mit der Stromversorgungseinrichtung in Steuerverbindung steht, dass beim Auftreten einer außerhalb des Sollwertbereichs liegenden Betriebstemperatur die an den Betriebsspannungsanschlüssen mindestens eines der Hallsensoren anliegende elektrische Versorgungsspannung abgesenkt oder abgeschaltet wird. Die Spannung am Ausgang des mindestens einen Hallsensors reduziert sich dann soweit, dass das entsprechende Ausgangssignal von der Ansteuereinrichtung als "0" interpretiert wird. Auch durch diese Maßnahme wird mit geringem schaltungstechnischem Aufwand eine Begrenzung der Betriebstemperatur des Elektromotors ermöglicht.

Vorteilhaft ist, wenn die Temperaturüberwachungseinrichtung derart mit der Stromversorgungseinrichtung in Steuerverbindung steht, dass beim Auftreten einer außerhalb des Sollwertbereichs liegenden Betriebstemperatur die an den Betriebsspannungsanschlüssen sämtlicher Hallsensoren anliegenden elektrischen Versorgungsspannungen abgesenkt oder abgeschaltet werden. Die Temperaturbegrenzungseinrichtung für den Elektromotor ist dann noch kostengünstiger herstellbar.

Bei einer zweckmäßigen Ausgestaltung der Erfindung ist der Inkrementalgeber derart ausgebildet ist, dass
- beim Auftreten einer außerhalb eines ersten Sollwertbereichs liegenden Betriebstemperatur an den Lagemesssignaleingang ein nicht plausibler erster Signalzustand oder eine Abfolge von nicht plausiblen ersten Signalzuständen und
- beim Auftreten einer außerhalb eines zweiten Sollwertbereichs liegenden Betriebstemperatur an den Lagemesssignaleingang ein nicht plausibler zweiter Signalzustand oder eine Abfolge von nicht plausiblen zweiten Signalzuständen anlegt wird,
wobei die Ansteuereinrichtung derart ausgestaltet ist, dass beim Auftreten des ersten Signalzustands oder der Abfolge von ersten Signalzuständen die Leistung des Elektromotors begrenzt und beim Auftreten des zweiten Signalzustands oder der Abfolge von zweiten Signalzuständen die Stromzufuhr zum Elektromotor gesperrt wird. Es wird also zwischen einer Temperaturwarnung und einer Temperaturabschaltung unterschieden. Beim Auftreten einer Temperaturwarnung kann der Elektromotor über die Ansteuereinrichtung zunächst weiterhin angesteuert werden, wobei die Ansteuerung jedoch so erfolgt, dass Positionierbewegungen des Elektromotors auf ein notwendiges Maß beschränkt werden. Dies kann beispielsweise dadurch erreicht werden, dass bestimmte Funktionen vorübergehend gesperrt werden. Auch kann dem Fahrer des Kraftfahrzeugs eine Übertemperaturwarnung angezeigt werden. Wenn diese Maßnahme nicht ausreichen sollten um die Betriebstemperatur des Elektromotors in dem Sollwertbereich zu halten, wird der Elektromotor zum Schutz vor thermischer Beschädigung oder Zerstörung abgeschaltet. Vor dem Abschalten des Elektromotors kann das Kraftfahrzeug ggf. in einen unkritischen Betriebszustand gebracht werden.

Vorteilhaft ist, wenn der Lagemesssignalausgang mehrere, unterschiedliche Stellen oder Bits des Lagemesssignals zugeordnete Ausgangsanschlüsse aufweist, und wenn
- beim Auftreten der außerhalb des ersten Sollwertbereichs liegenden Betriebstemperatur ein erster Ausgangsanschluss und
- beim Auftreten der außerhalb des zweiten Sollwertbereichs liegenden Betriebstemperatur ein zweiter Ausgangsanschluss auf ein vorgegebenes, festes elektrisches Potential gelegt wird.

Die Temperaturwarn- und -abschaltfunktion für den Elektromotor kann dadurch mit sehr geringem schaltungstechnischem Aufwand kostengünstig realisiert werden.

Die vorstehend genannte Aufgabe wird bei dem Verfahren der eingangs genannten Art dadurch gelöst, dass die Betriebstemperatur des Elektromotors erfasst und mit einem vorgegebenen Sollwertbereich verglichen wird, und dass beim Auftreten einer außerhalb des Sollwertbereichs liegenden Betriebstemperatur ein nicht plausibler Signalzustand des Lagemesssignals erzeugt wird.

Beim Überschreiten einer vorgegebenen Betriebstemperatur des Elektromotors wird also ein Messfehler in dem Lagemesssignal vorgetäuscht, um eine Abschaltung und/oder eine Leistungsbegrenzung des Elektromotors zu erreichen. Die Anforderung für die Abschaltung und/oder Leistungsbegrenzung kann somit auf einfache Weise über die für die Übertragung des Lagemesssignals vorhandenen Leitungen erfolgen.

Die vorstehend genannte Aufgabe kann bei einem Aktor der eingangs genannten Art auch dadurch gelöst werden, dass der Inkrementalgeber zur Erfassung der Betriebstemperatur des Elektromotors eine Temperaturmesseinrichtung aufweist, dass eine Vergleichseinrichtung zum Vergleichen der erfassten Betriebstemperatur mit einem vorgegebenen Sollwertbereich vorgesehen ist, dass der Inkrementalgeber eine Einrichtung zum Verändern seines Betriebsstroms hat, dass diese Einrichtung derart mit der Temperaturmesseinrichtung und/oder der Vergleichseinrichtung in Steuerverbindung steht, dass der Betriebsstrom in Abhängigkeit von der Betriebstemperatur und/oder dem Ergebnis des Vergleichs einstellbar ist, dass die Ansteuereinrichtung eine Messeinrichtung für den Betriebsstrom aufweist, die derart mit der Endstufe in Steuerverbindung steht, dass beim Auftreten einer außerhalb des Sollwertbereichs liegenden Betriebstemperatur die Stromzufuhr zum Elektromotor gesperrt und/oder die Leistung des Elektromotors begrenzt wird.

Der Betriebsstrom des Aktors wird also in Abhängigkeit von der gemessenen Betriebstemperatur in dem Inkrementalgeber moduliert und in der Ansteuereinrichtung demoduliert, um den Messwert für die Betriebstemperatur und/oder das Ergebnis des Vergleichs zwischen dem Messwert und dem vorgegebenen Sollwertbereich von der Temperaturmesseinrichtung des Inkrementalgebers an die Auswerteeinrichtung zu übermitteln. In vorteilhafter Weise können somit die zwischen der Ansteuereinrichtung und dem Inkrementalgeber vorhandenen Stromversorgungsleitungen für die Informationsübermittlung genutzt werden.

Nachfolgend sind Ausführungsbeispiele der Erfindung anhand der Zeichnung näher erläutert. Es zeigen:
- Fig. 1: ein schematisches Schaltbild eines Aktors, der einen Elektromotor, einen Inkre- mentalgeber und eine Ansteuereinrichtung für den Elektromotor aufweist,
- Fig. 2: ein Teilschaltbild eines ersten Ausführungsbeispiels des Aktors,
- Fig. 3: ein Teilschaltbild eines zweiten Ausführungsbeispiels des Aktors,
- Fig. 4: ein Teilschaltbild eines dritten Ausführungsbeispiels des Aktors,
- Fig. 5: eine graphische Darstellung der Stromaufnahme des Inkrementalgebers in Abhängigkeit von der Betriebstemperatur des Elektromotors, wobei auf der Ab- szisse die Betriebstemperatur und auf der Ordinate der Strom aufgetragen sind,
- Fig. 6: ein Teilschaltbild eines vierten Ausführungsbeispiels des Aktors, und
- Fig. 7: ein Teilschaltbild eines fünften Ausführungsbeispiels des Aktors.

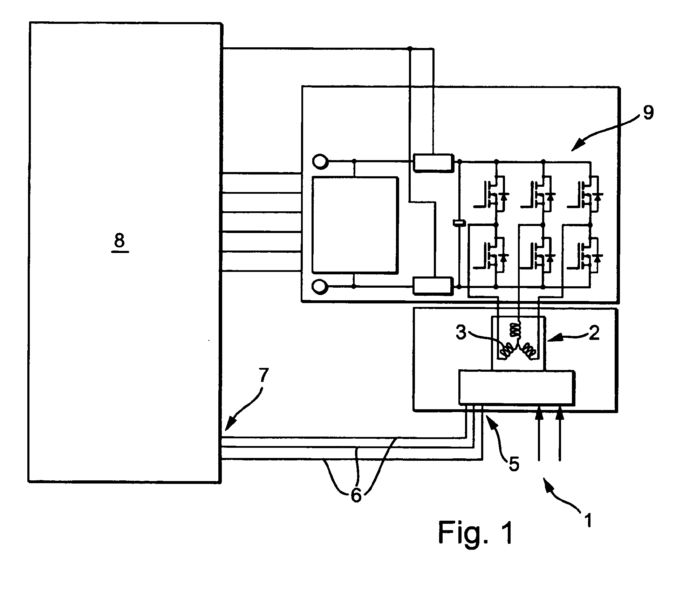

Ein in Fig. 1 im Ganzen mit 1 bezeichneter Aktor für ein Kraftfahrzeug weist einen Elektromotor 2 auf, der über ein in der Zeichnung nicht näher dargestelltes Getriebe mit einem Betätigungselement für eine Scheibenkupplung verbunden ist. Der Elektromotor 2 hat ein Primärteil mit einer Motorwicklung 3 und einem permanentmagnetischen Sekundärteil. Am Umgang des Sekundärteils ist in an sich bekannter Weise eine Reihe von Magnetsegmenten angeordnet, die abwechselnd Nord- und Südpole aufweist und mit der Wicklung über einen Luftspalt zusammenwirkt.

Zur Erfassung der Lage des Sekundärteils relativ zum Primärteil ist an dem Elektromotor 2 ein Inkrementalgeber vorgesehen, der mehrere ortsfest an dem Primärteil angeordnete und in Umfangsrichtung des Primärteils voneinander beabstandete Hall-Sensoren 4 aufweist, die den Magnetsegmenten des Sekundärteils zugewandt sind und deren Magnetfeld detektieren.

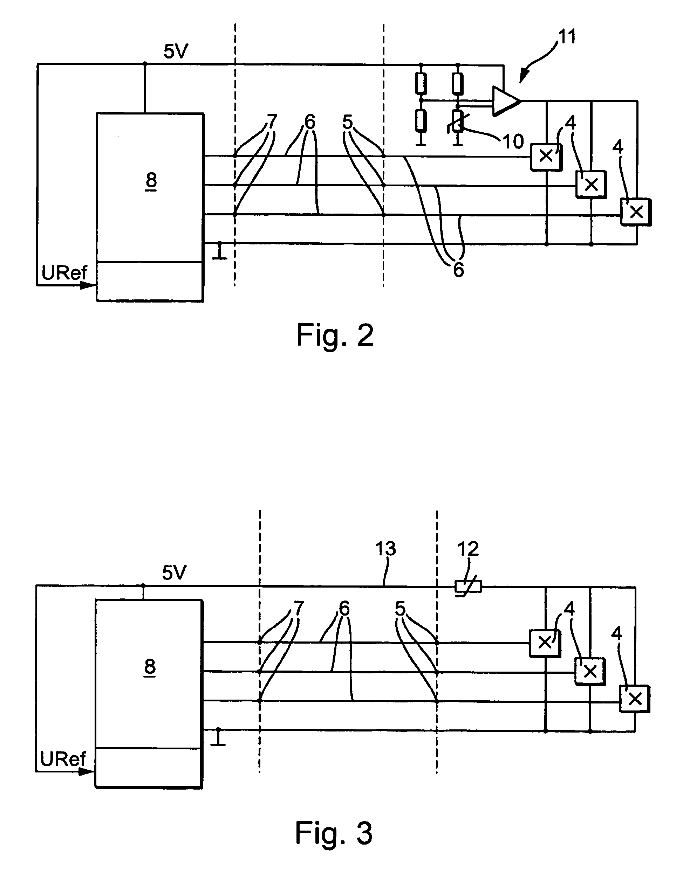

Der Inkrementalgeber hat einen Lagemesssignalausgang 5, an dem in Abhängigkeit von der Relativposition zwischen Primär- und Sekundärteil ein digitales Lagemesssignal ausgebbar ist. Das Lagemesssignal kann eine vorgegebene Anzahl von unterschiedlichen Signalzuständen annehmen, die jeweils einer Relativposition zugeordnet sind. Bei den in Fig. 2 und 3 gezeigten Ausführungsbeispielen sind die Schaltmuster der Hall-Sensoren 4 so gewählt, dass bei fehlerfreier Lagemessung die Signalzustände "000" und "111" nicht auftreten.

Zur Kommutierung des Elektromotors 2 ist der Lagemesssignalausgang 5 über elektrische Verbindungsleitungen 6 mit einem Lagemesssignaleingang 7 einer von dem Inkrementalgeber beabstandeten Ansteuereinrichtung 8 verbunden. Diese ist über eine Endstufe 9 an der Motorwicklung angeschlossen. Wie in Fig. 1 erkennbar ist, weist die Endstufe eine Brückenschaltung mit Halbleiterschaltern auf.

Die Ansteuereinrichtung 8 hat eine Einrichtung zur Überprüfung der Plausibilität des Lagemesssignals. Diese Einrichtung ist derart ausgestaltet, dass beim Auftreten eines nicht plausiblen Signalzustands die Stromzufuhr zum Elektromotor 2 unterbrochen oder zumindest begrenzt wird.

Der Inkrementalgeber hat eine Temperaturüberwachungseinrichtung, die zur Erfassung der Betriebstemperatur des Elektromotors 2 ausgebildet ist.

Bei dem in Fig. 2 gezeigten Ausführungsbeispiel, hat die Temperaturüberwachungseinrichtung einen thermisch gut leitend mit dem Primärteil des Elektromotors 2 verbundenen Heißleiter 10. Dieser ist Teil einer Vergleichseinrichtung 11, welche die Betriebstemperatur des Elektromotors 2 mit einem vorgegebenen Sollwertbereich vergleicht. Ein Ausgang der Vergleichseinrichtung 11 ist mit Stromversorgungsanschlüssen der Hall-Sensoren 4 verbunden. Wenn die Betriebstemperatur innerhalb des Sollwertbereichs liegt, liegt eine elektrische Versorgungsspannung an den Hall-Sensoren 4 an. Wenn die Betriebstemperatur außerhalb des Sollwertbereichs liegt, ist die Versorgungsspannung abgeschaltet. An dem Lagemesssignaleingang 7 liegt dann der nicht plausible Signalzustand "000" an. Die Ansteuereinrichtung 8 erkennt dies und schaltet den Elektromotor 2 ab. In Fig. 2 ist noch erkennbar, dass die Vergleichseinrichtung 11 aus einer Stromversorgungseinrichtung gespeist wird, die in die Ansteuereinrichtung 8 integriert ist. Diese ist von dem Inkrementalgeber beabstandet.

Bei dem in Fig. 3 gezeigten Ausführungsbeispiel weist die Temperaturüberwachungseinrichtung einen thermisch gut leitend mit dem Primärteil des Elektromotors 2 verbundenen Kaltleiter 12 auf, der in eine Stromversorgungsleitung 13 geschaltet ist, die Stromversorgungsanschlüsse der Hall-Sensoren 4 mit der Stromversorgungseinrichtung verbindet. Durch den mit den Hall-Sensoren 4 in Reihe geschalteten Kaltleiter 12 nimmt die Versorgungsspannung an den Hall-Sensoren 4 mit zunehmender Betriebstemperatur des Elektromotors 2 ab, bis die Hall-Sensoren 4 nicht mehr durchschalten, wenn die Betriebstemperatur außerhalb des vorgegebenen Sollwertbereichs liegt. Dabei wird bei dem in Fig. 3 gezeigten Ausführungsbeispiel der nicht plausible Signalzustand "000" an den Lagemesssignaleingang 7 angelegt. Die Ansteuereinrichtung 8 erkennt dies und schaltet den Elektromotor 2 ab.

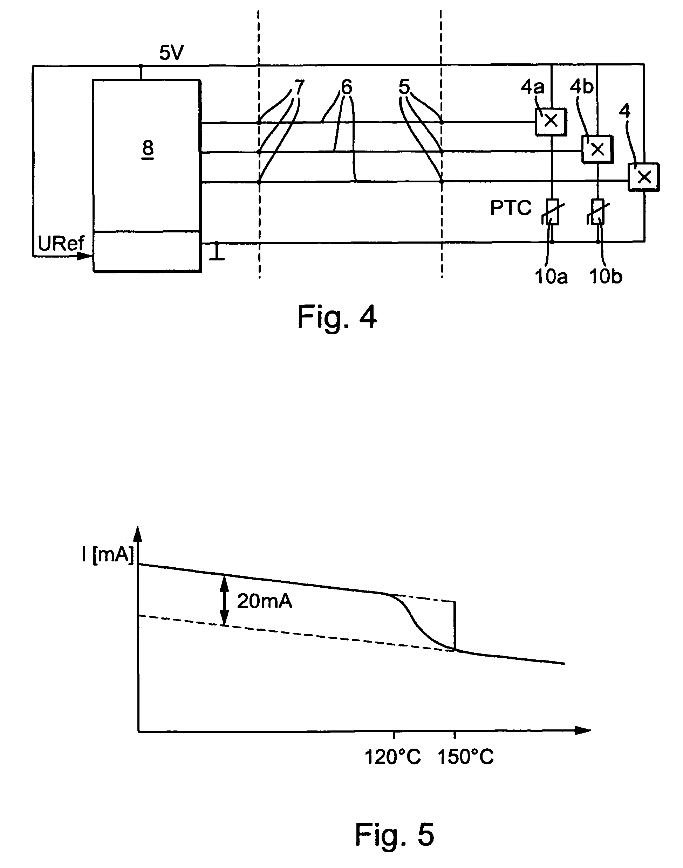

Der Lagemesssignalausgang 5 weist mehrere, unterschiedlichen Stellen oder Bits des Lagemesssignals zugeordnete Ausgangsanschlüsse auf. Dabei ist für jedes Bit ein Hall-Sensor 4 vorgesehen. Während bei den Ausführungsbeispielen gemäß Fig. 2 und 3 jeweils alle Ausgangsanschlüsse auf ein vorgegebenes Potential gelegt werden, wenn die Betriebstemperatur des Elektromotors 2 außerhalb des vorgegebenen Sollwertbereichs liegt, werden bei dem in Fig. 4 gezeigten Ausführungsbeispiel die Hall-Sensoren 4 einzeln in Abhängigkeit von der Betriebstemperatur des Elektromotors 2 abgeschaltet. Dies wird dadurch erreicht, dass in die Stromversorgungsleitung eines ersten Hall-Sensors 4a ein erster Heißleiter 10a und in die Stromversorgungsleitung eines zweiten Hall-Sensors 4b ein zweiter Heißleiter 10b mit von der Temperaturcharakteristik des ersten Heißleiters 10a abweichender Temperaturcharakteristik geschaltet ist. Beim Auftreten einer außerhalb eines ersten Sollwertbereichs liegenden Betriebstemperatur wird der erste Hall-Sensor 4a zur Übermittlung einer Temperaturwarnung an die Ansteuereinrichtung abgeschaltet. Die Ansteuereinrichtung detektiert das Signalmuster "xx0" und reduziert die Leistung des Elektromotors 2, beispielsweise indem bestimmte Funktionen des Kraftfahrzeugs, für die der Elektromotor angesteuert werden müsste, gesperrt werden. Die Temperaturwarnung kann dazu ggf. an eine übergeordnete Steuerung weitergeleitet werden. Wenn der erste Hall-Sensor 4a abgeschaltet ist, wird der Elektromotor in einer Art Notbetrieb mit den verbleibenden Bits des Lagemesssignals kommutiert.

Beim Auftreten einer außerhalb eines zweiten Sollwertbereichs liegenden Betriebstemperatur, wird zusätzlich zu dem ersten Hall-Sensor 4a ein zweiter Hall-Sensor 4b abgeschaltet. Die Ansteuereinrichtung detektiert das Signalmuster "x00" und schaltet die Stromzufuhr zu dem Elektromotor über die Endstufe ab.

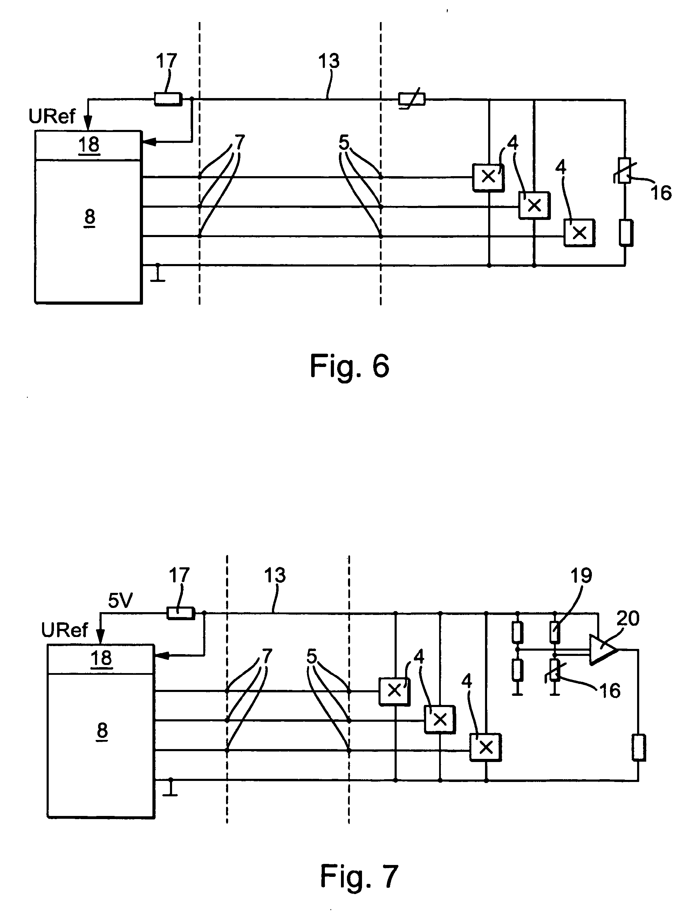

Bei den in Fig. 6 und 7 gezeigten Ausführungsbeispielen hat der Inkrementalgeber einen thermisch leitend mit dem Elektromotor 2 verbundenen Temperatursensor. Bei dem Ausführungsbeispiel gemäß Fig. 6 ist der Temperatursensor ein temperaturabhängiger Widerstand 16 mit nichtlinearer Kennlinie, der zu den Stromversorgungsanschlüssen der Hall-Sensoren 4 parallel geschaltet ist. In Fig. 5 ist deutlich erkennbar, dass sich der Betriebsstrom des Inkrementalgebers aufgrund des parallel geschalteten Widerstands 16 in Abhängigkeit von der Betriebstemperatur des Elektromotors 2 verändert. Dabei ist bei Betriebstemperaturen unterhalb von etwa 120 °C ein Offset auf den Betriebsstrom der Hall-Sensoren 4 aufgeprägt. In einem Betriebstemperaturbereich zwischen etwa 120 °C und 150 °C nimmt der Offset mit zunehmender Temperatur auf einen vernachlässigbar kleinen Wert ab.

Die Ansteuereinrichtung 8 weist eine Messeinrichtung mit einem Shunt 17 auf, der mit den Hall-Sensoren 4 in Reihe geschaltet ist. Die zu dem Betriebsstrom proportionale, an dem Shunt 17 abfallende elektrische Spannung wird mittels eines A/D-Konverters 18 digitalisiert und der so erhaltene Digitalwert wird einer Vergleichseinrichtung zugeführt, um ihn mit einem vorgegebenen Sollwertbereich zu vergleichen. Die Vergleichseinrichtung steht derart mit der Endstufe 9 in Steuerverbindung, dass beim Auftreten einer außerhalb des Sollwertbereichs liegenden Betriebstemperatur die Stromzufuhr zum Elektromotor 2 gesperrt wird.

Bei dem in Fig. 7 gezeigten Ausführungsbeispiel ist der temperaturabhängige Widerstand 16 mit einem Widerstandselement 19 zu einer Halbbrücke in Reihe geschaltet, an der eine konstante elektrische Spannung anliegt. Die Halbbrücke ist zwischen dem Widerstand 16 und dem Widerstandselement 19 an einem ersten Eingang eines Verstärkers 20 angeschlossen. Ein zweiter Eingang des Verstärkers 20 liegt auf einem festen elektrischen Potential. An einem Ausgang des Verstärkers 20 ist an einem Lastwiderstand angeschlossen. Die Stromversorgungsanschlüsse des Verstärkers 20 sind zu den Stromversorgungsanschlüssen der Hall-Sensoren 4 parallel geschaltet.

### Bezugszeichenliste

- 1: Aktor
- 2: Elektromotor
- 3: Motorwicklung
- 4: Hall-Sensor
- 4a: erster Hall-Sensor
- 4b: zweiter Hall-Sensor
- 5: Lagemesssignalausgang
- 6: Verbindungsleitung
- 7: Lagemesssignaleingang
- 8: Ansteuereinrichtung
- 9: Endstufe
- 10: Heißleiter
- 10a: erster Heißleiter
- 10b: zweiter Heißleiter
- 11: Vergleichseinrichtung
- 12: Kaltleiter
- 13: Stromversorgungsleitung
- 16: Widerstand
- 17: Shunt
- 18: A/D-Konverter
- 19: Widerstandselement
- 20: Verstärker

## Patentansprüche

1. Aktor (1) zum Betätigen einer Kupplung und/oder eines Getriebes in einem Kraftfahrzeug, mit einem Elektromotor (2) und einem Inkrementalgeber dafür, wobei der Inkrementalgeber einen Lagemesssignalausgang (5) aufweist, an dem ein Lagemesssignal ausgebbar ist, das eine Anzahl von unterschiedlichen Signalzuständen aufweist, die jeweils einer Relativposition zwischen einem Primärteil und einem Sekundärteil des Elektromotors (2) zugeordnet sind, wobei der Lagemesssignalausgang zur Kommutierung des Elektromotors (2) mit einem Lagemesssignaleingang (7) einer Ansteuereinrichtung (8) für eine Motorwicklung (3) des Elektromotors (2) verbunden ist, wobei die Ansteuereinrichtung (8) eine Einrichtung zur Überprüfung der Plausibilität des Lagemesssignals aufweist und derart ausgestaltet ist, dass beim Auftreten eines nicht plausiblen Signalzustands die Stromzufuhr zum Elektromotor (2) gesperrt und/oder die Leistung des Elektromotors (2) begrenzt wird, **dadurch gekennzeichnet, dass** der Inkrementalgeber eine zur Erfassung der Betriebstemperatur des Elektromotors (2) ausgebildete Temperaturüberwachungseinrichtung aufweist, und dass der Inkrementalgeber derart ausgebildet ist, dass beim Auftreten einer außerhalb des Sollwertbereichs liegenden Betriebstemperatur an den Lagemesssignalausgang (5) ein nicht plausibler Signalzustand gelegt wird.

2. Aktor (1) nach Anspruch 1, **dadurch gekennzeichnet, dass** der Lagemesssignalausgang (5) mehrere, unterschiedlichen Stellen oder Bits des Lagemesssignals zugeordnete Ausgangsanschlüsse aufweist, und dass der Inkrementalgeber derart ausgebildet ist, dass beim Auftreten der außerhalb des Sollwertbereichs liegenden Betriebstemperatur mindestens ein Ausgangsanschluss auf ein vorgegebenes, festes elektrisches Potential gelegt wird.

3. Aktor (1) nach Anspruch 1 oder 2, **dadurch gekennzeichnet, dass** der Inkrementalgeber Hallsensoren (4, 4a, 4b) zur Erfassung eines von der Relativposition zwischen dem Primärteil und dem Sekundärteil abhängigen Magnetfelds aufweist, dass Betriebsspannungsanschlüsse der Hallsensoren (4, 4a, 4b) mit einer Stromversorgungseinrichtung verbunden sind, und dass die Temperaturüberwachungseinrichtung derart mit der Stromversorgungseinrichtung in Steuerverbindung steht, dass beim Auftreten einer außerhalb des Sollwertbereichs liegenden Betriebstemperatur die an den Betriebsspannungsanschlüssen mindestens eines der Hallsensoren (4, 4a, 4b) anliegende elektrische Versorgungsspannung abgesenkt oder abgeschaltet wird.

4. Aktor (1) nach Anspruch 3, **dadurch gekennzeichnet, dass** die Temperaturüberwachungseinrichtung derart mit der Stromversorgungseinrichtung in Steuerverbindung steht, dass beim Auftreten einer außerhalb des Sollwertbereichs liegenden Betriebstemperatur die an den Betriebsspannungsanschlüssen sämtlicher Hallsensoren (4, 4a, 4b) anliegenden elektrischen Versorgungsspannungen abgesenkt oder abgeschaltet werden.

5. Aktor (1) nach einem der Ansprüche 1 bis 4, **dadurch gekennzeichnet, dass** der Inkrementalgeber derart ausgebildet ist, dass
- beim Auftreten einer außerhalb eines ersten Sollwertbereichs liegenden Betriebstemperatur an den Lagemesssignaleingang (7) ein nicht plausibler erster Signalzustand oder eine Abfolge von nicht plausiblen ersten Signalzuständen und
- beim Auftreten einer außerhalb eines zweiten Sollwertbereichs liegenden Betriebstemperatur an den Lagemesssignaleingang (7) ein nicht plausibler zweiter Signalzustand oder eine Abfolge von nicht plausiblen zweiten Signalzuständen anlegt wird,
und dass die Ansteuereinrichtung (8) derart ausgestaltet ist, dass beim Auftreten des ersten Signalzustands oder der Abfolge von ersten Signalzuständen die Leistung des Elektromotors (2) begrenzt und beim Auftreten des zweiten Signalzustands oder der Abfolge von zweiten Signalzuständen die Stromzufuhr zum Elektromotor (2) gesperrt wird.

6. Aktor (1) nach einem der Ansprüche 1 bis 5, **dadurch gekennzeichnet, dass** der Lagemesssignalausgang (5) mehrere, unterschiedlichen Stellen oder Bits des Lagemesssignals zugeordnete Ausgangsanschlüsse aufweist, und dass
- beim Auftreten der außerhalb des ersten Sollwertbereichs liegenden Betriebstemperatur ein erster Ausgangsanschluss und
- beim Auftreten der außerhalb des zweiten Sollwertbereichs liegenden Betriebstemperatur ein zweiter Ausgangsanschluss auf ein vorgegebenes, festes elektrisches Potential gelegt wird.

7. Verfahren zum Betreiben eines einen Elektromotor (2) aufweisenden Aktors (1) in einem Kraftfahrzeug, wobei ein Lagemesssignal für den Elektromotor (2) erfasst und der Elektromotor (2) in Abhängigkeit von dem Lagemesssignal kommutiert wird, wobei das Lagemesssignal eine Anzahl von unterschiedlichen Signalzuständen aufweist, die jeweils einer Relativposition zwischen einem Primärteil und einem Sekundärteil des Elektromotors (2) zugeordnet sind, wobei die Plausibilität des Lagemesssignals überprüft und beim Auftreten eines nicht plausiblen Signalzustands die Stromzufuhr zum Elektromotor (2) gesperrt und/oder die Leistung des Elektromotors (2) begrenzt wird, **dadurch gekennzeichnet, dass** die Betriebstemperatur des Elektromotors (2) erfasst und mit einem vorgegebenen Sollwertbereich verglichen wird, und dass beim Auftreten einer außerhalb des Sollwertbereichs liegenden Betriebstemperatur ein nicht plausibler Signalzustand des Lagemesssignals erzeugt wird.

8. Aktor (1) zum Betätigen einer Kupplung und/oder eines Getriebes in einem Kraftfahrzeug, mit einem eine Motorwicklung (3) aufweisenden Elektromotor (2) und einem Inkrementalgeber dafür, wobei der Inkrementalgeber einen Lagemesssignalausgang (5) aufweist, der zur Kommutierung des Elektromotors (2) mit einem Lagemesssignaleingang (7) einer Ansteuereinrichtung (8) für den Elektromotor (2) verbunden ist, wobei die Ansteuereinrichtung (8) eine Stromversorgungseinrichtung für den Inkrementalgeber hat und über eine Endstufe (9) mit der Motorwicklung (3) verbunden ist, **dadurch gekennzeichnet, dass** der Inkrementalgeber zur Erfassung der Betriebstemperatur des Elektromotors (2) eine Temperaturmesseinrichtung (16) aufweist, dass eine Vergleichseinrichtung zum Vergleichen der erfassten Betriebstemperatur mit einem vorgegebenen Sollwertbereich vorgesehen ist, dass der Inkrementalgeber eine Einrichtung (16; 16, 19, 20) zum Verändern seines Betriebsstroms hat, dass diese Einrichtung derart mit der Temperaturmesseinrichtung und/oder der Vergleichseinrichtung in Steuerverbindung steht, dass der Betriebsstrom in Abhängigkeit von der Betriebstemperatur und/oder dem Ergebnis des Vergleichs einstellbar ist, dass die Ansteuereinrichtung (8) eine Messeinrichtung (17) für den Betriebsstrom aufweist, die derart mit der Endstufe (9) in Steuerverbindung steht, dass beim Auftreten einer außerhalb des Sollwertbereichs liegenden Betriebstemperatur die Stromzufuhr zum Elektromotor (2) gesperrt und/oder die Leistung des Elektromotors (2) begrenzt wird.

## Claims

1. Actuator (1) for operating a clutch and/or a gearbox in a motor vehicle, having an electric motor (2) and an incremental encoder for the said electric motor, with the incremental encoder having a position measurement signal output (5) from which a position measurement signal can be output, the said position measurement signal having a number of different signal states which are each associated with a relative position between a primary part and a secondary part of the electric motor (2), with the position measurement signal output being connected to a position measurement signal input (7) of a drive device (8) for a motor winding (3) of the electric motor (2) for the purpose of commutating the electric motor (2), with the drive device (8) having a device for checking the plausibility of the position measurement signal and being configured in such a way that, when an implausible signal state occurs, the power supply to the electric motor (2) is turned off and/or the power of the electric motor (2) is limited, **characterized in that** the incremental encoder has a temperature monitoring device which is designed to detect the operating temperature of the electric motor (2), and **in that** the incremental encoder is designed in such a way that, when an operating temperature is outside the setpoint value range, an implausible signal state is produced at the position measurement signal output (5).

2. Actuator (1) according to Claim 1, **characterized in that** the position measurement signal output (5) has a plurality of output connections which are associated with different locations or bits of the position measurement signal, and **in that** the incremental encoder is designed in such a way that, when the operating temperature is outside the setpoint value range, at least one output connection is connected to a predefinable, fixed electrical potential.

3. Actuator (1) according to Claim 1 or 2, **characterized in that** the incremental encoder has Hall sensors (4, 4a, 4b) for detecting a magnetic field which is dependent on the relative position between the primary part and the secondary part, **in that** operating voltage connections of the Hall sensors (4, 4a, 4b) are connected to a power supply device, and **in that** the temperature monitoring device is connected in terms of control to the power supply device in such a way that, when an operating temperature is outside the setpoint value range, the electrical supply voltage applied to the operating voltage connections of at least one of the Hall sensors (4, 4a, 4b) is reduced or switched off.

4. Actuator (1) according to Claim 3, **characterized in that** the temperature monitoring device is connected in terms of control to the power supply device in such a way that, when an operating temperature is outside the setpoint value range, the electrical supply voltages applied to the operating voltage connections of all the Hall sensors (4, 4a, 4b) are reduced or switched off.

5. Actuator (1) according to one of Claims 1 to 4, **characterized in that** the incremental encoder is designed in such a way that
- when an operating temperature is outside a first setpoint value range, an implausible first signal state or a sequence of implausible first signal states is applied to the position measurement signal input (7) and
- when an operating temperature is outside a second setpoint value range, an implausible second signal state or a sequence of implausible second signal states is applied to the position measurement signal input (7),
and **in that** the drive device (8) is configured in such a way that, when the first signal state or the sequence of first signal states occurs, the power of the electric motor (2) is limited and, when the second signal state or the sequence of second signal states occurs, the power supply to the electric motor (2) is turned off.

6. Actuator (1) according to one of Claims 1 to 5, **characterized in that** the position measurement signal output (5) has a plurality of output connections which are associated with different locations or bits of the position measurement signal, and **in that**
- when the operating temperature is outside the first setpoint value range, a first output connection is connected to a predefinable fixed electrical potential and
- when the operating temperature is outside the second setpoint value range, a second output connection is connected to a predefinable fixed electrical potential.

7. Method for operating an actuator (1), which has an electric motor (2), in a motor vehicle, with a position measurement signal for the electric motor (2) being detected and the electric motor (2) being commutated as a function of the position measurement signal, with the position measurement signal having a number of different signal states which are each associated with a relative position between a primary part and a secondary part of the electric motor (2), with the plausibility of the position measurement signal being checked and, when an implausible signal state occurs, the power supply to the electric motor (2) is turned off and/or the power of the electric motor (2) is limited, **characterized in that** the operating temperature of the electric motor (2) is detected and compared with a predefinable setpoint value range, and **in that**, when an operating temperature is outside the setpoint value range, an implausible signal state of the position measurement signal is generated.

8. Actuator (1) for operating a clutch and/or a gearbox in a motor vehicle, having an electric motor (2), which has a motor winding (3), and an incremental encoder for the said electric motor, with the incremental encoder having a position measurement signal output (5) which is connected to a position measurement signal input (7) of a drive device (8) for the electric motor (2) for the purpose of commutating the electric motor (2), with the drive device (8) having a power supply device for the incremental encoder and being connected to the motor winding (3) via an output stage (9), **characterized in that** the incremental encoder has a temperature measurement device (16) for detecting the operating temperature of the electric motor (2), **in that** a comparison device is provided for comparing the detected operating temperature with a predefined setpoint value range, **in that** the incremental encoder has a device (16; 16, 19, 20) for changing its operating current, **in that** this device is connected in terms of control to the temperature measurement device and/or to the comparison device in such a way that the operating current can be adjusted as a function of the operating temperature and/or the result of the comparison, **in that** the drive device (8) has a measurement device (17) for the operating current, which measurement device is connected in terms of control to the output stage (9) in such a way that, when an operating temperature is outside the setpoint value range, the power supply to the electric motor (2) is turned off and/or the power of the electric motor (2) is limited.

## Revendications

1. Actionneur (1) pour actionner un accouplement et/ou une boîte de vitesses dans un véhicule automobile, comprenant un moteur électrique (2) et un codeur incrémental à cet effet, le codeur incrémental présentant une sortie de signal de mesure de position (5) sur laquelle peut être délivré un signal de mesure de position qui présente une pluralité d'états de signal différents, lesquels sont respectivement associés à une position relative entre une partie primaire et une partie secondaire du moteur électrique (2), la sortie de signal de mesure de position étant reliée, en vue de la commutation du moteur électrique (2), avec une entrée de signal de mesure de position (7) d'un dispositif de commande (8) pour un enroulement de moteur (3) du moteur électrique (2), le dispositif de commande (8) présentant un dispositif pour vérifier la plausibilité du signal de mesure de position et étant configuré de telle sorte que lorsqu'il se produit un état de signal non plausible, l'alimentation électrique du moteur électrique (2) est coupée et/ou la puissance du moteur électrique (2) est limitée, **caractérisé en ce que** le codeur incrémental présente un dispositif de surveillance de la température conçu pour détecter la température de fonctionnement du moteur électrique (2) et que le codeur incrémental est configuré de telle sorte que lorsqu'il se produit une température de fonctionnement en dehors de la plage de valeurs de consigne, un état de signal non plausible est appliqué à la sortie de signal de mesure de position (5).

2. Actionneur (1) selon la revendication 1, **caractérisé en ce que** la sortie de signal de mesure de position (5) présente plusieurs bornes de sortie associées à des positions ou des bits différents du signal de mesure de position et que le codeur incrémental est configuré de telle sorte que lorsqu'il se produit une température de fonctionnement en dehors de la plage de valeurs de consigne, au moins une borne de sortie est amenée à un potentiel électrique fixe prédéfini.

3. Actionneur (1) selon la revendication 1 ou 2, **caractérisé en ce que** le codeur incrémental présente des capteurs à effet Hall (4, 4a, 4b) pour la détection d'un champ magnétique dépendant de la position relative entre la partie primaire et la partie secondaire, que les bornes de tension de service des capteurs à effet Hall (4, 4a, 4b) sont reliées avec un dispositif d'alimentation électrique et que le dispositif de surveillance de la température se trouve en liaison de commande avec le dispositif d'alimentation électrique de telle sorte que lorsqu'il se produit une température de fonctionnement en dehors de la plage de valeurs de consigne, la tension d'alimentation électrique appliquée aux bornes de tension de service d'au moins l'un des capteurs à effet Hall (4, 4a, 4b) est réduite ou déconnectée.

4. Actionneur (1) selon la revendication 3, **caractérisé en ce que** le dispositif de surveillance de la température se trouve en liaison de commande avec le dispositif d'alimentation électrique de telle sorte que lorsqu'il se produit une température de fonctionnement en dehors de la plage de valeurs de consigne, les tensions d'alimentation électrique appliquées aux bornes de tension de service de tous les capteurs à effet Hall (4, 4a, 4b) sont réduites ou déconnectées.

5. Actionneur (1) selon l'une des revendications 1 à 4, **caractérisé en ce que** le codeur incrémental est configuré de telle sorte que
- lorsqu'il se produit une température de fonctionnement e dehors d'une première plage de valeurs de consigne, un premier état de signal non plausible ou une séquence de premiers états de signal non plausibles est appliqué à l'entrée de signal de mesure de position (7) et
- lorsqu'il se produit une température de fonctionnement en dehors d'une deuxième plage de valeurs de consigne, un deuxième état de signal non plausible ou une séquence de deuxièmes états de signal non plausibles est appliqué à l'entrée de signal de mesure de position (7),
et que le dispositif de commande (8) est configuré de telle sorte qu'en présence du premier état de signal ou de la séquence de premiers états de signal, la puissance du moteur électrique (2) est limitée et en présence du deuxième état de signal ou de la séquence de deuxièmes états de signal, l'alimentation électrique du moteur électrique (2) est coupée.

6. Actionneur (1) selon l'une des revendications 1 à 5, **caractérisé en ce que** la sortie de signal de mesure de position (5) présente plusieurs bornes de sortie associées à des positions ou des bits différents du signal de mesure de position et que
- lorsqu'il se produit la température de fonctionnement en dehors de la première plage de valeurs de consigne, une première borne de sortie est amenée à un potentiel électrique fixe prédéfini et
- lorsqu'il se produit la température de fonctionnement en dehors de la deuxième plage de valeurs de consigne, une deuxième borne de sortie est amenée à un potentiel électrique fixe prédéfini.

7. Procédé de fonctionnement d'un actionneur (1) présentant un moteur électrique (2), un signal de mesure de position du moteur électrique (2) étant détecté et le moteur électrique (2) étant commuté en fonction du signal de mesure de position, le signal de mesure de position présentant une pluralité d'états de signal différents, lesquels sont respectivement associés à une position relative entre une partie primaire et une partie secondaire du moteur électrique (2), la plausibilité du signal de mesure de position étant vérifiée et, lorsqu'il se produit un état de signal non plausible, l'alimentation électrique du moteur électrique (2) est coupée et/ou la puissance du moteur électrique (2) est limitée, **caractérisé en ce que** la température de fonctionnement du moteur électrique (2) est détectée et comparée avec une plage de valeurs de consigne prédéfinie et que lorsqu'il se produit une température de fonctionnement en dehors de la plage de valeurs de consigne, un état de signal non plausible du signal de mesure de position est généré.

8. Actionneur (1) pour actionner un accouplement et/ou une boîte de vitesses dans un véhicule automobile, comprenant un moteur électrique (2) qui présente un enroulement de moteur (3) et un codeur incrémental à cet effet, le codeur incrémental présentant une sortie de signal de mesure de position (5) qui est reliée avec une entrée de signal de mesure de position (7) d'un dispositif de commande (8) pour le moteur électrique (2), le dispositif de commande (8) possédant un dispositif d'alimentation électrique pour le codeur incrémental et étant relié avec l'enroulement de moteur (3) par le biais d'un étage final (9), **caractérisé en ce que** le codeur incrémental présente un dispositif de mesure de la température (16) pour détecter la température de fonctionnement du moteur électrique (2), qu'il est prévu un dispositif de comparaison pour comparer la température de fonctionnement détectée avec une plage de valeurs de consigne prédéfinie, que le codeur incrémental possède un dispositif (16 ; 16, 19, 20) pour modifier son courant de fonctionnement, que ce dispositif est en liaison de commande avec le dispositif de mesure de température et/ou le dispositif de comparaison de telle sorte que le courant de fonctionnement peut être réglé en fonction de la température de fonctionnement et/ou du résultat de la comparaison, que le dispositif de commande (8) présente un dispositif de mesure (17) pour le courant de fonctionnement, lequel se trouve en liaison de commande avec l'étage final (9) de telle sorte que lorsqu'il se produit une température de fonctionnement en dehors de la plage de valeurs de consigne, l'alimentation électrique du moteur électrique (2) est coupée et/ou la puissance du moteur électrique (2) est limitée.
